# EUROPEAN PATENT APPLICATION

(11) **EP 3 057 001 A1**
(43) Date of publication of application: **17.08.2016**
(21) Application number: 13896495.2
(22) Date of filing: 31.10.2013
(51) Int. Cl.: G06F 17/30

(54) **COLUMNAR DATABASE PROCESSING METHOD AND DEVICE**

(71) Applicant: Huawei Technologies Co., Ltd., Longgang District Shenzhen, Guangdong 518129 (CN)
(72) Inventor: LI, Jun, Shenzhen Guangdong 518129 (CN); SHI, Huihua, Shenzhen Guangdong 518129 (CN)
(74) Representative: Pfenning, Meinig & Partner mbB
(86) International application number: PCT/CN2013/086341
(87) International publication number: WO 2015/062035

(57) **Abstract**

The present invention relates to the field of data analysis, and discloses a columnar database processing method and apparatus, which can improve utilization of a Cache and shorten a processing time of data processing in the columnar database. A specific implementation method includes: acquiring a database action statement of a columnar database, and generating a first execution diagram according to the database action statement; grouping all operators in the first execution diagram, to generate at least one group information, where each information group corresponds to one group; modifying an execution process of the first execution diagram according to the at least one group information, to generate a second execution diagram; and processing data in the columnar database according to the second execution diagram. The present invention is applied to processing of data in a columnar database.

## Description

### TECHNICAL FIELD

The present invention relates to the field of data analysis, and in particular, to a columnar database processing method and apparatus.

### BACKGROUND

In an online analytical processing (Online Analytical Processing, OLAP for short) scenario in the field of data analysis, because a columnar database is more applicable to the OLAP scenario than a row-oriented database is, the columnar database becomes the most popular database technology in the OLAP scenario in the current field of data analysis. During data storage, the columnar database usually first divides a data table defined by a user into multiple columns, and each column forms a file. In this way, during analysis of a large amount of data, the columnar database only needs to read columns in query statements. Therefore, when a data amount is relatively large, processing efficiency is relatively high.

However, the inventors find that, although the columnar database has the foregoing advantages, when data in a database is processed, the data needs to be swapped in/out from a Cache multiple times because an operator (operator) of the columnar database processes one column of data at a time, which results in relatively low utilization of the cache Cache. Moreover, when a size of a column of data exceeds that of the Cache, the columnar database is written from the Cache into memory and is then reloaded into the Cache. As a result, a processing time of data processing in the columnar database is prolonged. Therefore, a problem how to improve the utilization of the Cache and how to shorten the processing time of data processing in the columnar database is expected to be resolved in the industry at present.

### SUMMARY

Embodiments of the present invention provide a columnar database processing method and apparatus, which can improve utilization of a Cache and shorten a processing time of data processing in the columnar database.

According to a first aspect, a columnar database processing method is provided, including:
acquiring a database action statement of a columnar database, and generating a first execution diagram according to the database action statement;
grouping operators in the first execution diagram, to generate at least one group information, where each group information corresponds to one group;
modifying an execution process of the first execution diagram according to the at least one group information, to generate a second execution diagram; and
processing data in the columnar database according to the second execution diagram.

In a first possible implementation manner of the first aspect, the grouping operators in the first execution diagram, to generate at least one group information includes:
traversing the first execution diagram, and successively determining whether each operator in the first execution diagram has a barrier feature;
if a currently determined operator has the barrier feature, terminating a current group, generating group information of the current group, and generating a new group;
if the currently determined operator does not have the barrier feature, adding the currently determined operator to the current group;
where the barrier feature includes a specific operation pre-selected by a user, and the specific operation is any one of the following operations: a selection operation, a multi-table input operation, and an output-to-multiple-operator operation.

With reference to the first aspect or the first possible implementation manner of the first aspect, in a second possible implementation manner, the modifying an execution process of the first execution diagram according to the at least one group information, to generate a second execution diagram includes:
modifying, according to each piece of group information in the at least one group information, an execution process of a group corresponding to each piece of group information; and
integrating execution processes, obtained by modification, of groups corresponding to all pieces of group information, to generate the second execution diagram.

With reference to the second possible implementation manner of the first aspect, in a third possible implementation manner, the group information includes an operator information table, and the operator information table is a table showing a relationship between each operator in the group and an operator type corresponding to each operator, where the operator type is a sequence operator, a blocking operator, or a common operator, and the common operator refers to an operator of another type than the sequence operator and the blocking operator.

With reference to the third possible implementation manner of the first aspect, in a fourth possible implementation manner, the group information further includes a group identity, where if the group identity is a sequence identity, it indicates that operators in a group corresponding to the group information are all sequence operators; if the group identity is a blocking identity, it indicates that operators in a group corresponding to the group information include blocking operators; if the group information does not include a group identity, it indicates that operators in a group corresponding to the group information are all common operators.

With reference to the fourth possible implementation manner of the first aspect, in a fifth possible implementation manner, the modifying, according to each piece of group information in the at least one group information, an execution process of a group corresponding to each piece of group information includes:
if a group identity in a first group information is the sequence identity, performing segmentation processing on each column of data in the columnar database, and successively performing processing by using each operator in a group corresponding to the first group information and in a sequence of segments of data that are obtained by segmentation;
   or,
if a group identity in a first group information is the blocking identity, invoking combination operators, and replacing all operators in a group corresponding to the first group information with the combination operators;
   or,
if a first group information does not include a group identity, skipping modifying an execution process of a group corresponding to the first group information;
where the first group information is one group information in the at least one group information.

With reference to the fifth possible implementation manner of the first aspect, in a sixth possible implementation manner, the if a group identity in a first group information is the blocking identity, invoking combination operators, and replacing all operators in a group corresponding to the first group information with the combination operators includes:
if the group identity in the first group information is the blocking identity, invoking the combination operators from an information mapping table according to all blocking operators in the first group, and replacing all operators in the first group with the combination operators, where the information mapping table is a table showing a mapping relationship between a blocking operator and a combination operator.

With reference to the fifth possible implementation manner or the sixth possible implementation manner of the first aspect, in a seventh possible implementation manner, if the combination operators are sequence operators,
after the invoking combination operators, and replacing all operators in a group corresponding to the first group information with the combination operators, the method further includes:
   performing segmentation processing on each column of data of the columnar database, and successively performing processing by using the combination operators and in a sequence of segments of data that are obtained by segmentation.

With reference to the fourth possible implementation manner of the first aspect, in an eighth possible implementation manner, the modifying, according to each piece of group information in the at least one group information, an execution process of a group corresponding to each piece of group information includes:
if all operators in an operator information table in a first group information are all sequence operators, performing segmentation processing on each column of data in the columnar database, and successively performing processing by using each operator in a group corresponding to the first group information and in a sequence of segments of data that are obtained by segmentation;
   or,
if operators in an operator information table in a first group information include blocking operators, invoking combination operators, and replacing all operators in a group corresponding to the first group information with the combination operators;
   or,
if operators in an operator information table in a first group information are common operators, skipping modifying an execution process of a group corresponding to the first group information;
where the first group information is one group information in the at least one group information.

According to a second aspect, a columnar database processing apparatus is provided, including:
a generation module, configured to acquire a database action statement of a columnar database, and generate a first execution diagram according to the database action statement;
a grouping module, configured to group operators in the first execution diagram, to generate at least one group information, where each group information corresponds to one group;
a processing module, configured to modify an execution process of the first execution diagram according to the at least one group information, generated by the grouping module, to generate a second execution diagram; and
an execution module, configured to process data in the columnar database according to the second execution diagram.

In a first possible implementation manner of the second aspect, the grouping module is specifically configured to: traverse the first execution diagram, and successively determine whether each operator in the first execution diagram has a barrier feature; if a currently determined operator has the barrier feature, terminate a current group, generate group information of the current group, and generate a new group; if the currently determined operator does not have the barrier feature, add the currently determined operator to the current group;
where the barrier feature includes a specific operation pre-selected by a user, and the specific operation is any one of the following operations: a selection operation, a multi-table input operation, and an output-to-multiple-operator operation.

With reference to the second aspect or the first possible implementation manner of the second aspect, in a second possible implementation manner, the processing module includes:
a processing unit, configured to modify, according to each piece of group information in the at least one group information, generated by the grouping module, an execution process of a group corresponding to each piece of group information; and
an integration unit, configured to integrate execution processes, obtained by modification, of groups corresponding to all pieces of group information, to generate the second execution diagram.

With reference to the second possible implementation manner of the second aspect, in a third possible implementation manner, the grouping information includes an operator information table, and the operator information table is a table showing a relationship between each operator in the group and an operator type corresponding to each operator, where the operator type is a sequence operator, a blocking operator, or a common operator, and the common operator refers to an operator of another type than the sequence operator and the blocking operator.

With reference to the third possible implementation manner of the second aspect, in a fourth possible implementation manner, the group information further includes a group identity, where if the group identity is a sequence identity, it indicates that operators in a group corresponding to the group information are all sequence operators; if the group identity is a blocking identity, it indicates that operators in a group corresponding to the group information include blocking operators; if the group information does not include a group identity, it indicates that operators in a group corresponding to the group information are all common operators.

With reference to the fourth possible implementation manner of the second aspect, in a fifth possible implementation manner, the processing unit is specifically configured to:
if a group identity in a first group information is the sequence identity, perform segmentation processing on each column of data in the columnar database, and successively perform processing by using each operator in a group corresponding to the first group information and in a sequence of segments of data that are obtained by segmentation;
   or,
if a group identity in a first group information is the blocking identity, invoke combination operators, and replace all operators in a group corresponding to the first group information with the combination operators;
   or,
if a first group information does not include a group identity, skip modifying an execution process of a group corresponding to the first group information;
where the first group information is one group information in the at least one group information.

With reference to the fifth possible implementation manner of the second aspect, in a sixth possible implementation manner, the if a group identity in a first group information is the blocking identity, invoking combination operators, and replacing all operators in a group corresponding to the first group information with the combination operators is specifically:
if the group identity in the first group information is the blocking identity or if the operators in an operator information table in the first group information include blocking operators, invoking the combination operators from an information mapping table according to all blocking operators in the first group, and replacing all operators in the first group with the combination operators, where the information mapping table is a table showing a mapping relationship between a blocking operator and a combination operator.

With reference to the fifth possible implementation manner or the sixth possible implementation manner of the second aspect, in a seventh possible implementation manner, if the combination operators are sequence operators,
after invoking the combination operators, and replacing all operators in the group corresponding to the first group information with the combination operators, the processing unit is further configured to: perform segmentation processing on each column of data of the columnar database, and successively perform processing by using the combination operators and in a sequence of segments of data that are obtained by segmentation.

With reference to the fourth possible implementation manner of the second aspect, in an eighth possible implementation manner, the processing unit is specifically configured to:
if all operators in an operator information table in a first group information are all sequence operators, perform segmentation processing on each column of data in the columnar database, and successively perform processing by using each operator in a group corresponding to the first group information and in a sequence of segments of data that are obtained by segmentation;
   or,
if operators in an operator information table in a first group information include blocking operators, invoke combination operators, and replace all operators in a group corresponding to the first group information with the combination operators;
   or,
if operators in an operator information table in a first group information are common operators, skip modifying an execution process of a group corresponding to the first group information;
where the first group information is one group information in the at least one group information.

According to a third aspect, a columnar database processing apparatus is provided, including: a processor and a memory, where the memory stores an execution instruction; when the apparatus runs, the processor and the memory communicate with each other; and the processor executes the execution instruction to enable the apparatus to execute the following method:
acquiring a database action statement of a columnar database, and generating a first execution diagram according to the database action statement;
grouping operators in the first execution diagram, to generate at least one group information, where each group information corresponds to one group;
modifying an execution process of the first execution diagram according to the at least one group information, to generate a second execution diagram; and
processing data in the columnar database according to the second execution diagram.

In a first possible implementation manner of the third aspect, in the method executed by the processor, the grouping operators in the first execution diagram, to generate at least one group information includes: traversing the first execution diagram, and successively determining whether each operator in the first execution diagram has a barrier feature; if a currently determined operator has the barrier feature, terminating a current group, generating group information of the current group, storing the group information in the memory, and generating a new group; if the currently determined operator does not have the barrier feature, adding the currently determined operator to the current group;
where the barrier feature includes a specific operation pre-selected by a user, and the specific operation is any one of the following operations: a selection operation, a multi-table input operation, and an output-to-multiple-operator operation.

With reference to the third aspect or the first possible implementation manner of the third aspect, in a second possible implementation manner, in the method executed by the processor, the modifying an execution process of the first execution diagram according to the at least one group information, to generate a second execution diagram includes: modifying, according to each piece of group information in the at least one group information, an execution process of a group corresponding to each piece of group information; and integrating execution processes, obtained by modification, of groups corresponding to all pieces of group information, to generate the second execution diagram.

With reference to the second possible implementation manner of the third aspect, in a third possible implementation manner, the grouping information includes an operator information table, and the operator information table is a table showing a relationship between each operator in the group and an operator type corresponding to each operator, where the operator type is a sequence operator, a blocking operator, or a common operator, and the common operator refers to an operator of another type than the sequence operator and the blocking operator.

With reference to the third possible implementation manner of the third aspect, in a fourth possible implementation manner, the group information further includes a group identity, where if the group identity is a sequence identity, it indicates that operators in a group corresponding to the group information are all sequence operators; if the group identity is a blocking identity, it indicates that operators in a group corresponding to the group information include blocking operators; if the group information does not include a group identity, it indicates that operators in a group corresponding to the group information are all common operators.

With reference to the fourth possible implementation manner of the third aspect, in a fifth possible implementation manner, in the method executed by the processor, the modifying, according to each piece of group information in the at least one group information, an execution process of a group corresponding to each piece of group information includes:
if a group identity in a first group information is the sequence identity, performing segmentation processing on each column of data in the columnar database, and successively performing processing by using each operator in a group corresponding to the first group information and in a sequence of segments of data that are obtained by segmentation;
   or,
if a group identity in a first group information is the blocking identity, invoking combination operators, and replacing all operators in a group corresponding to the first group information with the combination operators;
   or,
if a first group information does not include a group identity, skipping modifying an execution process of a group corresponding to the first group information;
where the first group information is one group information in the at least one group information.

With reference to the fifth possible implementation manner of the third aspect, in a sixth possible implementation manner, in the method executed by the processor, the if a group identity in a first group information is the blocking identity, invoking combination operators, and replacing all operators in a group corresponding to the first group information with the combination operators includes: if the group identity in the first group information is the blocking identity, invoking the combination operators from an information mapping table according to all blocking operators in the first group, and replacing all operators in the first group with the combination operators, where the information mapping table is a table showing a mapping relationship between a blocking operator and a combination operator.

With reference to the fifth possible implementation manner or the sixth possible implementation manner of the third aspect, in a seventh possible implementation manner, if the combination operators are sequence operators,
after the invoking combination operators, and replacing all operators in a group corresponding to the first group information with the combination operators, the method executed by the processor further includes: performing segmentation processing on each column of data of the columnar database, and successively performing processing by using the combination operators and in a sequence of segments of data that are obtained by segmentation.

With reference to the fourth possible implementation manner of the third aspect, in an eighth possible implementation manner, in the method executed by the processor, the modifying, according to each piece of group information in the at least one group information, an execution process of a group corresponding to each piece of group information includes:
if all operators in an operator information table in a first group information are all sequence operators, performing segmentation processing on each column of data in the columnar database, and successively performing processing by using each operator in a group corresponding to the first group information and in a sequence of segments of data that are obtained by segmentation;
   or,
if operators in an operator information table in a first group information include blocking operators, invoking combination operators, and replacing all operators in a group corresponding to the first group information with the combination operators;
   or,
if operators in an operator information table in a first group information are common operators, skipping modifying an execution process of a group corresponding to the first group information;
where the first group information is one group information in the at least one group information.

In the columnar database processing method and apparatus according to the embodiments of the present invention, all operators in an execution diagram are grouped, to generate at least one group information, and an execution process of the execution diagram is modified according to the at least one group information, so that the execution process of the entire execution diagram is optimized; and finally, data in a columnar database is processed according to a new execution diagram that is obtained by optimization, thereby reducing a quantity of times the data is swapped in/out from a Cache, improving utilization of the Cache, and shortening a processing time of data processing in the columnar database.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic flowchart of a columnar database processing method according to an embodiment of the present invention;
FIG. 2 is a schematic flowchart of another columnar database processing method according to an embodiment of the present invention;
FIG. 3 is a schematic diagram of operator processing a column of data after grouping is performed according to an embodiment of the present invention;
FIG. 4 is a schematic diagram of combining operators in a group according to an embodiment of the present invention;
FIG. 5 is a schematic structural diagram of a columnar database processing apparatus according to an embodiment of the present invention;
FIG. 6 is a schematic structural diagram of another columnar database processing apparatus according to an embodiment of the present invention; and
FIG. 7 is a schematic structural diagram of a columnar database processing apparatus according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

A columnar database is one of the most popular database technologies in the current field of data analysis, and during data processing, the columnar database generally runs in a database management system on a common server. The database management system first converts an SQL (Structured Query Language, structured query language) submitted by a user into an execution tree, and then further translates the execution tree into an execution diagram, where each node in the execution diagram is called an operator, and each operator processes one or more complete columns. Moreover, because the columnar database processes one column at a time during data processing, data needs to be swapped in/out from a Cache multiple times, which results in low utilization of the Cache cache. Based on the foregoing application scenario, the present invention provides a new columnar database processing method.

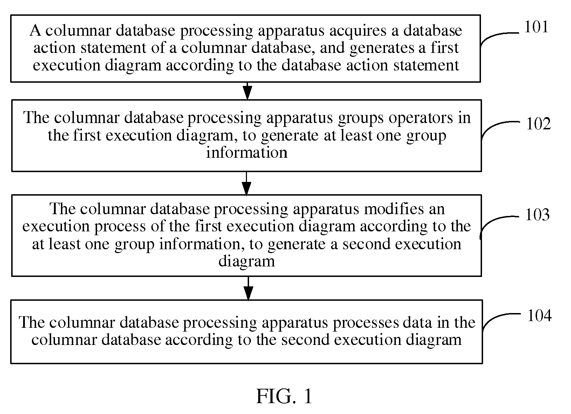

As shown in FIG. 1, this embodiment of the present invention provides a columnar database processing method, which specifically includes the following steps:
101. A columnar database processing apparatus acquires a database action statement of the columnar database, and generates a first execution diagram according to the database action statement.

Specifically, after acquiring an SQL language submitted by a user, the columnar database processing apparatus parses the SQL statement into a corresponding execution tree according to syntax. In this case, some low-efficiency operations probably exist after an SQL query statement is decomposed by means of compilation, and therefore, after the execution tree is generated, this execution tree is optimized according to an existing rule, for example, functions such as select push-down and combination of repeated operators are performed, thereby reducing computational intensity of the entire execution tree. After optimization is performed on this execution tree, the execution tree is further translated into an execution diagram, where each node in the execution diagram corresponds to an operator, and each operator corresponds to an executable function. In this way, the columnar database processing apparatus invokes functions according to the execution diagram, thereby completing output of a result.

102. The columnar database processing apparatus groups operators in the first execution diagram, to generate at least one group information.

Each group information in the at least one group information corresponds to one group. The foregoing group information at least includes an operator information table, where the operator information table is a table showing a relationship between each operator in the group and an operator type corresponding to each operator, and may be a linear table structure. Specifically, the operator information table may be a table showing a mapping relationship between an operator and an operator type, each table node stores operator information of one operator, and the operator information includes an operator type of the operator. The operator type includes three types: a sequence operator, a blocking operator, and a common operator. The sequence operator refers to an operator for which a result can be obtained by means of simple combination after segmentation processing is performed on each column of data (herein, the segmentation processing refers to dividing a column of data into multiple segments, and the operator successively processes each segment of data); the blocking operator refers to an operator for which a result cannot be obtained simply by means of combination after segmentation processing is performed, for example, group by, order, and join; and the common operator refers to an operator of another type than the sequence operator and the blocking operator.

Further, the foregoing group information may further include a group identity. When the group identity in the group information is a sequence identity, it indicates that operators in a group corresponding to the group information are all sequence operators; when the group identity in the group information is a blocking identity, it indicates that operators in a group corresponding to the group information include blocking operators; when the group information does not include a group identity, it indicates that operators in a group corresponding to the group information are all common operators.

103. The columnar database processing apparatus modifies an execution process of the first execution diagram according to the at least one group information, to generate a second execution diagram.

Specifically, an execution process of each group is modified differently according to an operator type of an operator in a group corresponding to each group information. For example, each column of data in the columnar database is segmented, or all operators in the group are combined.

104. The columnar database processing apparatus processes data in the columnar database according to the second execution diagram.

In the columnar database processing method according to this embodiment of the present invention, all operators in an execution diagram are grouped, to generate at least one group information, and according to each group information in the at least one group information, an execution process of a group corresponding to the group information is correspondingly modified, so that the execution process of the entire execution diagram is optimized; and finally, data in the columnar database is processed according to a new execution diagram that is obtained by optimization, thereby reducing a quantity of times the data is swapped in/out from a Cache, improving utilization of the Cache, and shortening a processing time of data processing in the columnar database.

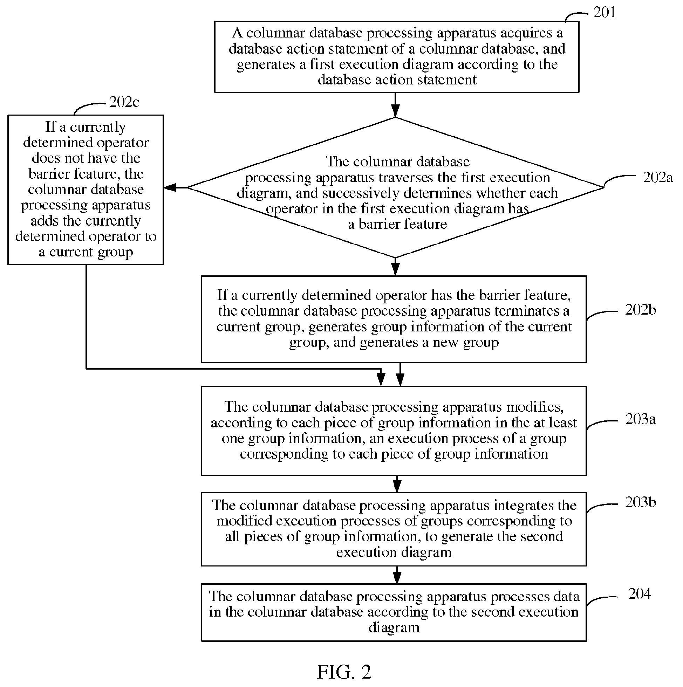

An embodiment of the present invention provides a columnar database processing method. As shown in FIG. 2, the method specifically includes the following steps:
201. A columnar database processing apparatus acquires a database action statement of a columnar database, and generates a first execution diagram according to the database action statement.

Specifically, after obtaining an SQL query statement submitted by a user, the columnar database processing apparatus parses the SQL statement into a corresponding execution tree according to syntax. In this case, some low-efficiency operations probably exist after the SQL query statement is decomposed by means of compilation, and therefore, after the execution tree is generated, this execution tree is optimized according to an existing rule, for example, functions such as select push-down and combination of repeated operators are performed, thereby reducing computational intensity of the entire execution tree. After optimization is performed on this execution tree, the execution tree is further translated into an execution diagram, where each node in the execution diagram corresponds to an operator operator, and each operator corresponds to an executable function. In this way, the columnar database processing apparatus invokes functions according to the execution diagram, thereby completing output of a result.

202. The columnar database processing apparatus groups all operators in the first execution diagram, to generate at least one group information.

Optionally, step 202 specifically includes the following steps:
202a. The columnar database processing apparatus traverses the first execution diagram, and successively determines whether each operator in the first execution diagram has a barrier feature.

The barrier feature is an operator feature of a special operator. Such a special operator includes an operator that has a specific operation and is pre-selected by a user according to an actual application scenario or pre-selected by a user according to an actually entered query statement, that is, the barrier feature includes a specific operation pre-selected by the user. Specifically, the foregoing specific operation is any one of the following operations: a selection operation, for example, a select operator; a multi-table input operation, for example, a join operator; and an output-to-multiple-operator operation. It should be noted that, the foregoing three specific operations are merely examples herein, and the present invention is not limited thereto in an actual application.

If a currently determined operator has the barrier feature, the process turns to step 202b; or if a currently determined operator does not have the barrier feature, the process turns to step 202c.

202b. If a currently determined operator has the barrier feature, the columnar database processing apparatus terminates a current group, generates group information of the current group, and generates a new group.

202c. If a currently determined operator does not have the barrier feature, the columnar database processing apparatus adds the currently determined operator to a current group.

Specifically, when all operators in the first execution diagram generated in step 201 are grouped, it is successively determined, in a sequence of the operators in the first execution diagram, whether each operator in the execution diagram has a barrier feature. Specifically, when the columnar database processing apparatus groups all operators in the first execution diagram, first, the columnar database processing apparatus initializes a first group, and then successively determines whether each operator in the first execution diagram has the barrier feature; when the second operator having the barrier feature is obtained by determining, the columnar database processing apparatus terminates the first group, generates group information corresponding to the first group, generates a second group, and stores the second operator having the barrier feature in the second group; and afterwards, successively determines the remaining operators and groups the remaining operators.

In addition, each group information in the at least one group information corresponds to one group. The foregoing group information at least includes an operator information table, where the operator information table is a table showing a relationship between each operator in the group and an operator type corresponding to each operator, and may be a linear table structure. Specifically, the operator information table may be a table showing a mapping relationship between an operator and an operator type, each table node stores operator information of one operator, and the operator information includes an operator type of the operator. The operator type includes three types: a sequence operator, a blocking operator, and a common operator. The sequence operator refers to an operator for which a result can be obtained by means of simple combination after segmentation processing is performed on each column of data (herein, the segmentation processing refers to dividing a column of data into multiple segments, and the operator successively processes each segment of data); the blocking operator refers to an operator for which a result cannot be obtained simply by means of combination after segmentation processing is performed, for example, group by, order, and join; and the common operator refers to an operator of another type than the sequence operator and the blocking operator.

Further, the foregoing group information may further include a group identity. When the group identity in the group information is a sequence identity, it indicates that operators in a group corresponding to the group information are all sequence operators; when the group identity in the group information is a blocking identity, it indicates that operators in a group corresponding to the group information include blocking operators; when the group information does not include a group identity, it indicates that operators in a group corresponding to the group information are all common operators.

203. The columnar database processing apparatus modifies an execution process of the first execution diagram according to the at least one group information, to generate a second execution diagram.

Specifically, an execution process of each group is modified differently according to an operator type of an operator in a group corresponding to each group information. For example, each column of data in the columnar database is segmented, or all operators in the group are combined.

Optionally, step 203 specifically includes the following steps:
203a. The columnar database processing apparatus modifies, according to each piece of group information in the at least one group information, an execution process of a group corresponding to each piece of group information.
203b. The columnar database processing apparatus integrates the modified execution processes of groups corresponding to all pieces of group information, to generate the second execution diagram.

Further, optionally, step 203a specifically includes the following steps:
203a1. If a group identity in a first group information is a sequence identity or if all operators in an operator information table in a first group information are sequence operators, the columnar database processing apparatus performs segmentation processing on each column of data in the columnar database, and successively performs processing by using each operator in a group corresponding to the first group information and in a sequence of segments of data that are obtained by segmentation.

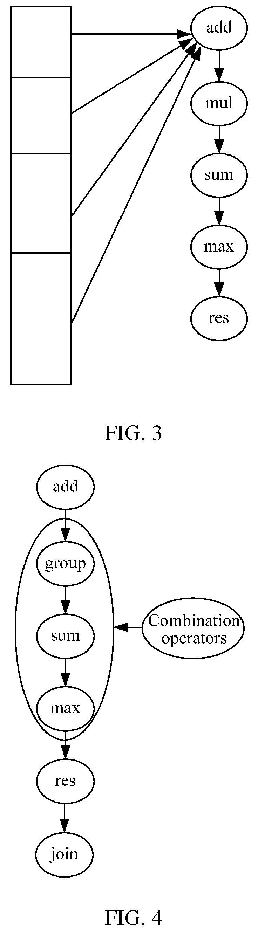

Specifically, when operators in the first group are all sequence operators, it indicates that an execution result can be obtained by means of simple combination after segmentation processing is performed on a column of data for the first group. Therefore, when all operators in the first group meet a condition of the sequence operator, an execution process of the first group is modified. Specifically, FIG. 3 is a schematic diagram of operator processing a column of data obtained after grouping is performed. As shown in FIG. 3, a procedure of modifying the execution process of the first group is as follows: first, segmenting each column of data in the columnar database, where results of segmenting the columns of data are the same; and then, successively and concurrently processing columns of data in the columnar database in a sequence of all operators in the execution diagram. It should be noted that, when each operator in the execution diagram concurrently processes columns of data in the columnar database, same segments of data of the columns of data are processed successively in a sequence of segments of data obtained after segmentation is performed on data of each column.

In addition, because a column of data obtained by segmentation can entirely exist in a data Cache of a CPU according to a size of the column of data, and data in the Cache does not need to be written into memory during switching between multiple operators, consumption of a memory bus is greatly reduced. Moreover, a speed at which the CPU reads data from and writes data into the Cache is about 10 times as fast as a speed at which the CPU reads data from and writes data into the memory. Therefore, the performing segmentation processing on the column of data of the columnar database reduces a quantity of times the data is swapped in/out from the Cache, obviously improves utilization of the Cache, and shortens the time of processing data in the columnar database.

Alternatively:
203a2: If a group identity in a first group information is the blocking identity or an operator information table in a first group information includes a blocking operator, the columnar database processing apparatus invokes combination operators, and replaces all operators in a group corresponding to the first group information with the combination operators.

Specifically, when the operators in the first group include blocking operators, it indicates that the first group cannot process data by simply using a segmentation method; therefore, when any operator in the first group meets a condition of a blocking operator, an execution process of the first group is modified. Specifically, FIG. 4 is a schematic diagram of combining operators in a group. As shown in FIG. 4, a procedure of modifying the execution process of the first group is as follows: invoking, from memory, combination operators corresponding to the blocking operators in the first group, and replacing all operators in the first group with the combination operators.

It should be noted that, operators that are combined perform multiple operations at the same time, thereby improving a data processing speed and shortening a data processing time. Specifically, original operators independently process data, and a processing time equals to a sum of a data processing time of two operators. However, a processing time of the operators that are combined is less than a sum of directly adding the processing time of the two original operators. In addition, some combination operators after the replacement support the segmentation operation, which improves utilization of the Cache and also shortens a data processing time.

Alternatively:
203a3. If a first group information does not include a group identity or operators in an operator information table in a first group information are common operators, the columnar database processing apparatus skips modifying an execution process of a group corresponding to the first group information.

It should be noted that, the foregoing first group information is one group information in the at least one group information, that is, a process of modifying an execution process corresponding to any group in the at least one group is specifically described in steps 203a1, 203a2, and 203a3 in the foregoing.

Further, optionally, step 203a2 specifically includes the following process:
If the group identity in the first group information is a blocking identity or the operator information table in the first group information includes a blocking operator, the columnar database processing apparatus invokes combination operators from an information mapping table according to all blocking operators in the first group, and replaces all operators in the first group with the combination operators.

Specifically, when the combination operators are invoked, because multiple operators are implemented at the same time, it is required to perform a table lookup operation. Specifically, a pre-configured information mapping table is looked up according to the blocking operators in the first group, to acquire the combination operators corresponding to the blocking operators. In this way, all operators in the first group are replaced with the combination operators. The foregoing information mapping table is a table showing a mapping relationship between a blocking operator and a combination operator. During table lookup, the blocking operators in the first group are first picked out, and then the combination operators are acquired from the information mapping table according to the blocking operators; or, the operators in the first group are successively matched in a storage sequence of the operators in the information mapping table, so as to invoke the combination operators. For example, it is determined whether a group by operator exists in the first group, and if the group by operator exists, combination operators including the group by operator are invoked; it is determined whether a join operator exists in the first group, and if the join operator exists, combination operators including the join operator are invoked; or it is determined whether an order operator exists in the first group, and if the order operator exists, combination operators including the order operator are invoked.

Optionally, if the combination operators are sequence operators, after step 203b2, the method further includes: performing, by the columnar database processing apparatus, segmentation processing on each column of data of the columnar database, and successively performing processing by using the combination operators and in a sequence of segments of data that are obtained by segmentation.

Specifically, after the operator invoking process in step 203b2, the blocking operators in the execution diagram are all replaced with the combination operators. Therefore, when the combination operators are sequence operators, the columnar database processing apparatus may further segment each column of data of the columnar database, and then successively performs processing by using the combination operators and in a sequence of segments of data that are obtained by segmentation.

204. The columnar database processing apparatus processes data in the columnar database according to the second execution diagram.

In the columnar database processing method according to this embodiment of the present invention, all operators in an execution diagram are grouped, to generate at least one group information, and according to each group information in the at least one group information, an execution process of a group corresponding to the group information is correspondingly modified, so that the execution process of the entire execution diagram is optimized; and finally, data in the columnar database is processed according to a new execution diagram that is obtained by optimization, thereby reducing a quantity of times the data is swapped in/out from a Cache, improving utilization of the Cache, and shortening a processing time of data processing in the columnar database.

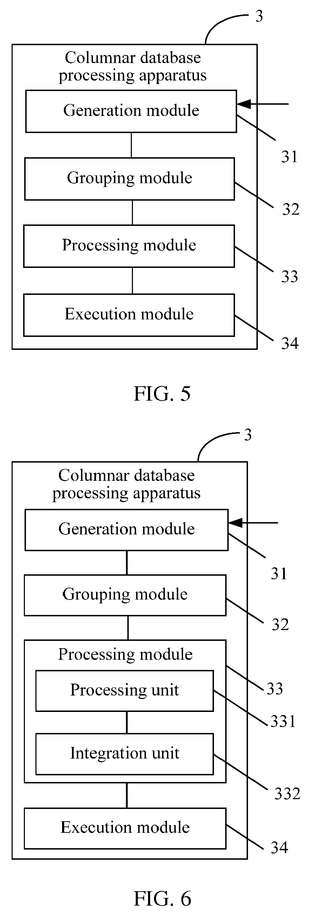

An embodiment of the present invention provides a columnar database processing apparatus. As shown in FIG. 5 and FIG. 6, the columnar database processing apparatus is configured to implement the foregoing columnar database processing method. The columnar database processing apparatus 3 includes: a generation module 31, a grouping module 32, a processing module 33, and an execution module 34, where
the generation module 31 is configured to acquire a database action statement of a columnar database, and generate a first execution diagram according to the database action statement;
the grouping module 32 is configured to group operators in the first execution diagram generated by the generation module 31, to generate at least one group information, where each group information corresponds to one group;
the processing module 33 is configured to modify an execution process of the first execution diagram according to the at least one group information, generated by the grouping module 32, to generate a second execution diagram; and
the execution module 34 is configured to process data in the columnar database according to the second execution diagram generated by the processing module 33.

The columnar database processing apparatus provided by this embodiment of the present invention groups all operators in an execution diagram, to generate at least one group information, and correspondingly modifies, according to each group information in the at least one group information, an execution process of a group corresponding to the group information, so that the execution process of the entire execution diagram is optimized; and finally, processes data in the columnar database according to a new execution diagram that is obtained by optimization, thereby reducing a quantity of times the data is swapped in/out from a Cache, improving utilization of the Cache, and shortening a processing time of data processing in the columnar database.

Optionally, the grouping module 32 is specifically configured to: traverse the first execution diagram, and successively determine whether each operator in the first execution diagram generated by the generation module 31 has a barrier feature; and if a currently determined operator has the barrier feature, terminate a current group, generate group information of the current group, and generate a new group; or if a currently determined operator does not have the barrier feature, add the currently determined operator to a current group.

The barrier feature includes a specific operation pre-selected by a user, and the specific operation is any one of the following operations: a selection operation, a multi-table input operation, and an output-to-multiple-operator operation.

Optionally, as shown in FIG. 6, the processing module 33 further includes: a processing unit 331 and an integration unit 332, where
the processing unit 331 is configured to modify, according to each piece of group information in the at least one group information, generated by the grouping module 32, an execution process of a group corresponding to each piece of group information; and
the integration unit 332 is configured to integrate modified execution processes, to generate the second execution diagram, where the modified execution processes are obtained by the processing unit 331 by means of modification and are of groups corresponding to all pieces of group information.

Optionally, the foregoing grouping information includes an operator information table, and the operator information table is a table showing a relationship between each operator in the group and an operator type corresponding to each operator, where the operator type is a sequence operator, a blocking operator, or a common operator, and the common operator refers to an operator of another type than the sequence operator and the blocking operator.

Optionally, the foregoing group information further includes a group identity, where if the group identity in the group information is a sequence identity, it indicates that operators in a group corresponding to the group information are all sequence operators; if the group identity in the group information is a blocking identity, it indicates that operators in a group corresponding to the group information include blocking operators; or if the group information does not include a group identity, it indicates that operators in a group corresponding to the group information are all common operators.

Optionally, the processing unit 33 is specifically configured to:
if a group identity in a first group information is the sequence identity, perform segmentation processing on each column of data in the columnar database, and successively perform processing by using each operator in a group corresponding to the first group information and in a sequence of segments of data that are obtained by segmentation;
   or,
if a group identity in a first group information is the blocking identity, invoke combination operators, and replace all operators in a group corresponding to the first group information with the combination operators;
   or,
if a first group information does not include a group identity, skip modifying an execution process of a group corresponding to the first group information;
where the first group information is one group information in the at least one group information.

Optionally, the processing unit 33 is specifically configured to: if the group identity in the first group information is the blocking identity, invoke the combination operators from an information mapping table according to all blocking operators in the first group, and replace all operators in the first group with the combination operators, where the information mapping table is a table showing a mapping relationship between a blocking operator and a combination operator.

Optionally, if the combination operators are sequence operators,
after invoking the combination operators, and replacing all operators in the group corresponding to the first group information with the combination operators, the processing unit 33 is further configured to: perform segmentation processing on each column of data of the columnar database, and successively perform processing by using the combination operators and in a sequence of segments of data that are obtained by segmentation.

Optionally, the processing unit 33 is specifically configured to:
if all operators in an operator information table in a first group information are all sequence operators, perform segmentation processing on each column of data in the columnar database, and successively perform processing by using each operator in a group corresponding to the first group information and in a sequence of segments of data that are obtained by segmentation;
   or,
if operators in an operator information table in a first group information include blocking operators, invoke combination operators, and replace all operators in a group corresponding to the first group information with the combination operators;
   or,
if operators in an operator information table in a first group information are common operators, skip modifying an execution process of a group corresponding to the first group information;
where the first group information is one group information in the at least one group information.

The columnar database processing apparatus provided by this embodiment of the present invention groups all operators in an execution diagram, to generate at least one group information, and correspondingly modifies, according to each group information in the at least one group information, an execution process of a group corresponding to the group information, so that the execution process of the entire execution diagram is optimized; and finally, processes data in the columnar database according to a new execution diagram that is obtained by optimization, thereby reducing a quantity of times the data is swapped in/out from a Cache, improving utilization of the Cache, and shortening a processing time of data processing in the columnar database.

It should be noted that, for an implementation manner and an interaction process of modules and units of the modules in the columnar database processing apparatus in the foregoing embodiments, reference may be made to related description in corresponding method embodiments.

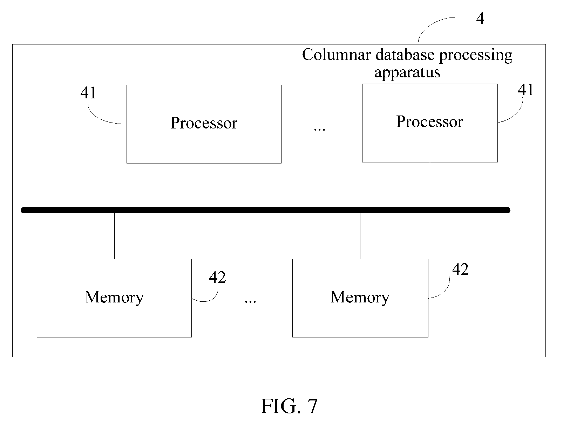

An embodiment of the present invention provides a columnar database processing apparatus. As shown in FIG. 7, the columnar database processing apparatus is configured to implement the foregoing columnar database processing method, and the columnar database processing apparatus may be a database management system running on a common server. Specifically, the columnar database processing apparatus 4 includes a processor 41 and a memory 42. The processor 41 is connected to other components by using a bus. The bus may be an industry standard architecture (Industry Standard Architecture, ISA for short) bus, a peripheral component (Peripheral Component, PCI for short) bus, an extended industry standard architecture (Extended Industry Standard Architecture, EISA for short) bus, or the like. The bus may be classified into an address bus, a data bus, a control bus, and the like. For ease of indication, one bold line is used to indicate the bus in FIG. 7, which, however, does not indicate that there is only one bus or only one type of buses.

The processor 41 may be a general central procession unit (central procession unit, CPU for short), an application specific integrated circuit (application specific integrated circuit, ASIC for short), a field programmable gate array (FPGA), or another programmable logic device. The memory 42 may be any applicable medium that can be accessed by a computer, which includes, but is not limited to storage media known in the field, such as a random access memory (random access memory, RAM for short), a disk storage (disk storage), a flash memory, a programmable read-only memory or an electrically erasable programmable memory, and a register.

The memory stores an execution instruction. When the columnar database processing apparatus runs, the processor communicates with the memory, and the processor 41 executes the execution instruction to enable the columnar database processing apparatus to execute the following method:
acquiring a database action statement of a columnar database, and generating a first execution diagram according to the database action statement;
grouping operators in the first execution diagram, to generate at least one group information, where each group information corresponds to one group;
modifying an execution process of the first execution diagram according to the at least one group information, to generate a second execution diagram; and
processing data in the columnar database according to the second execution diagram.

Optionally, in the method executed by the processor 41, the grouping operators in the first execution diagram, to generate at least one group information includes: traversing the first execution diagram, and successively determining whether each operator in the first execution diagram has a barrier feature; and if a currently determined operator has the barrier feature, terminating a current group, generating group information of the current group, storing the group information in the memory 42, and generating a new group; or if a currently determined operator does not have the barrier feature, adding the currently determined operator to a current group.

The barrier feature includes a specific operation pre-selected by a user, and the specific operation is any one of the following operations: a selection operation, a multi-table input operation, and an output-to-multiple-operator operation.

Optionally, the foregoing grouping information includes an operator information table, and the operator information table is a table showing a relationship between each operator in the group and an operator type corresponding to each operator, where the operator type is a sequence operator, a blocking operator, or a common operator, and the common operator refers to an operator of another type than the sequence operator and the blocking operator.

Optionally, the foregoing group information further includes a group identity, where if the group identity in the group information is a sequence identity, it indicates that operators in a group corresponding to the group information are all sequence operators; if the group identity in the group information is a blocking identity, it indicates that operators in a group corresponding to the group information include blocking operators; or if the group information does not include a group identity, it indicates that operators in a group corresponding to the group information are all common operators.

Optionally, in the method executed by the processor 41, the modifying an execution process of the first execution diagram according to the at least one group information, to generate a second execution diagram includes: modifying, according to each piece of group information in the at least one group information, an execution process of a group corresponding to each piece of group information; and integrating execution processes, obtained by modification, of groups corresponding to all pieces of group information, to generate the second execution diagram.

Optionally, in the method executed by the processor 41, the modifying, according to each piece of group information in the at least one group information, an execution process of a group corresponding to each piece of group information includes:
if a group identity in a first group information is the sequence identity, performing segmentation processing on each column of data in the columnar database, and successively performing processing by using each operator in a group corresponding to the first group information and in a sequence of segments of data that are obtained by segmentation;
   or,
if a group identity in a first group information is the blocking identity, invoking combination operators, and replacing all operators in a group corresponding to the first group information with the combination operators;
   or,
if a first group information does not include a group identity, skipping modifying an execution process of a group corresponding to the first group information;
where the first group information is one group information in the at least one group information.

Optionally, in the method executed by the processor 41, the if a group identity in a first group information is the blocking identity, invoking combination operators, and replacing all operators in a group corresponding to the first group information with the combination operators includes: if the group identity in the first group information is the blocking identity, invoking the combination operators from an information mapping table according to all blocking operators in the first group, and replacing all operators in the first group with the combination operators, where the information mapping table is a table showing a mapping relationship between a blocking operator and a combination operator.

Optionally, if the combination operators are sequence operators,
after invoking the combination operators, and replacing all operators in the group corresponding to the first group information with the combination operators, the method executed by the processor 41 further includes: performing segmentation processing on each column of data of the columnar database, and successively performing processing by using the combination operators and in a sequence of segments of data that are obtained by segmentation.

Optionally, in the method executed by the processor 41, the modifying, according to each piece of group information in the at least one group information, an execution process of a group corresponding to each piece of group information includes:
if all operators in an operator information table in a first group information are all sequence operators, performing segmentation processing on each column of data in the columnar database, and successively performing processing by using each operator in a group corresponding to the first group information and in a sequence of segments of data that are obtained by segmentation;
   or,
if operators in an operator information table in a first group information include blocking operators, invoking combination operators, and replacing all operators in a group corresponding to the first group information with the combination operators;
   or,
if operators in an operator information table in a first group information are common operators, skipping modifying an execution process of a group corresponding to the first group information;
where the first group information is one group information in the at least one group information.

The columnar database processing apparatus provided by this embodiment of the present invention groups all operators in an execution diagram, to generate group information of at least one group, and correspondingly modifies, according to group information of each group in the group information of at least one group, an execution process of a group corresponding to the group information, so that the execution process of the entire execution diagram is optimized; and finally, processes data in the columnar database according to a new execution diagram that is obtained by optimization, thereby reducing a quantity of times the data is swapped in/out from a Cache, improving utilization of the Cache, and shortening a processing time of data processing in the columnar database.

It should be noted that, for an implementation manner and an interaction process of the processor in the columnar database processing apparatus in the foregoing embodiments, reference may be made to related description in corresponding method embodiments.

It may be clearly understood by persons skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present application, but not for limiting the present application. Although the present application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present application.

## Claims

1. A columnar database processing method, comprising:
Acquiring a database action statement of a columnar database, and generating a first execution diagram according to the database action statement;
Grouping operators in the first execution diagram, to generate at least one group information, wherein each group information corresponds to one group;
Modifying an execution process of the first execution diagram according to the at least one group information, to generate a second execution diagram; and
Processing data in the columnar database according to the second execution diagram.

2. The method according to claim 1, wherein the grouping operators in the first execution diagram, to generate at least one group information comprises:
Traversing the first execution diagram, and successively determining whether each operator in the first execution diagram has a barrier feature;
if a currently determined operator has the barrier feature, terminating a current group, generating group information of the current group, and generating a new group;
if the currently determined operator does not have the barrier feature, adding the currently determined operator to the current group;
wherein the barrier feature comprises a specific operation pre-selected by a user, and the specific operation is any one of the following operations: a selection operation, a multi-table input operation, and an output-to-multiple-operator operation.

3. The method according to claim 1 or 2, wherein the modifying an execution process of the first execution diagram according to the at least one group information, to generate a second execution diagram comprises:
Modifying, according to each piece of group information in the at least one group information, an execution process of a group corresponding to each piece of group information; and
Integrating execution processes, obtained by modification, of groups corresponding to all pieces of group information, to generate the second execution diagram.

4. The method according to claim 3, wherein the grouping information comprises an operator information table, and the operator information table is a table showing a relationship between each operator in the group and an operator type corresponding to each operator, wherein the operator type is a sequence operator, a blocking operator, or a common operator, and the common operator refers to an operator of another type than the sequence operator and the blocking operator.

5. The method according to claim 4, wherein the group information further comprises a group identity, wherein if the group identity is a sequence identity, it indicates that operators in a group corresponding to the group information are all sequence operators; if the group identity is a blocking identity, it indicates that operators in a group corresponding to the group information comprise blocking operators; if the group information does not comprise a group identity, it indicates that operators in a group corresponding to the group information are all common operators.

6. The method according to claim 5, wherein the modifying, according to each piece of group information in the at least one group information, an execution process of a group corresponding to each piece of group information comprises:
if a group identity in a first group information is the sequence identity, performing segmentation processing on each column of data in the columnar database, and successively performing processing by using each operator in a group corresponding to the first group information and in a sequence of segments of data that are obtained by segmentation;
or,
if a group identity in a first group information is the blocking identity, invoking combination operators, and replacing all operators in a group corresponding to the first group information with the combination operators;
or,
if a first group information does not comprise a group identity, skipping modifying an execution process of a group corresponding to the first group information;
wherein the first group information is one group information in the at least one group information.

7. The method according to claim 6, wherein the if a group identity in a first group information is the blocking identity, invoking combination operators, and replacing all operators in a group corresponding to the first group information with the combination operators comprises:
if the group identity in the first group information is the blocking identity, invoking the combination operators from an information mapping table according to all blocking operators in the first group, and replacing all operators in the first group with the combination operators, wherein the information mapping table is a table showing a mapping relationship between a blocking operator and a combination operator.

8. The method according to claim 6 or 7, wherein if the combination operators are sequence operators,
after the invoking combination operators, and replacing all operators in a group corresponding to the first group information with the combination operators, the method further comprises:
performing segmentation processing on each column of data of the columnar database, and successively performing processing by using the combination operators and in a sequence of segments of data that are obtained by segmentation.

9. The method according to claim 4, wherein the modifying, according to each piece of group information in the at least one group information, an execution process of a group corresponding to each piece of group information comprises:
if all operators in an operator information table in a first group information are all sequence operators, performing segmentation processing on each column of data in the columnar database, and successively performing processing by using each operator in a group corresponding to the first group information and in a sequence of segments of data that are obtained by segmentation;
or,
if operators in an operator information table in a first group information comprise blocking operators, invoking combination operators, and replacing all operators in a group corresponding to the first group information with the combination operators;
or,
if operators in an operator information table in a first group information are common operators, skipping modifying an execution process of a group corresponding to the first group information;
wherein the first group information is one group information in the at least one group information.

10. A columnar database processing apparatus, comprising:
a generation module, configured to acquire a database action statement of a columnar database, and generate a first execution diagram according to the database action statement;
a grouping module, configured to group operators in the first execution diagram generated by the generation module, to generate at least one group information, wherein each group information corresponds to one group;
a processing module, configured to modify an execution process of the first execution diagram according to the at least one group information, generated by the grouping module, to generate a second execution diagram; and
an execution module, configured to process data in the columnar database according to the second execution diagram.

11. The apparatus according to claim 10, wherein the grouping module is specifically configured to: traverse the first execution diagram, and successively determine whether each operator in the first execution diagram generated by the generation module has a barrier feature; if a currently determined operator has the barrier feature, terminate a current group, generate group information of the current group, and generate a new group; if the currently determined operator does not have the barrier feature, add the currently determined operator to the current group;
wherein the barrier feature comprises a specific operation pre-selected by a user, and the specific operation is any one of the following operations: a selection operation, a multi-table input operation, and an output-to-multiple-operator operation.

12. The apparatus according to claim 10 or 11, wherein the processing module comprises:
a processing unit, configured to modify, according to each piece of group information in the at least one group information, generated by the grouping module, an execution process of a group corresponding to each piece of group information; and
an integration unit, configured to integrate execution processes, obtained by modification, of groups corresponding to all pieces of group information, to generate the second execution diagram.

13. The apparatus according to claim 12, wherein the grouping information comprises an operator information table, and the operator information table is a table showing a relationship between each operator in the group and an operator type corresponding to each operator, wherein the operator type is a sequence operator, a blocking operator, or a common operator, and the common operator refers to an operator of another type than the sequence operator and the blocking operator.

14. The apparatus according to claim 13, wherein the group information further comprises a group identity, wherein if the group identity is a sequence identity, it indicates that operators in a group corresponding to the group information are all sequence operators; if the group identity is a blocking identity, it indicates that operators in a group corresponding to the group information comprise blocking operators; if the group information does not comprise a group identity, it indicates that operators in a group corresponding to the group information are all common operators.

15. The apparatus according to claim 14, wherein the processing unit is specifically configured to:
if a group identity in a first group information is the sequence identity, perform segmentation processing on each column of data in the columnar database, and successively perform processing by using each operator in a group corresponding to the first group information and in a sequence of segments of data that are obtained by segmentation;
or,
if a group identity in a first group information is the blocking identity, invoke combination operators, and replace all operators in a group corresponding to the first group information with the combination operators;
or,
if a first group information does not comprise a group identity, skip modifying an execution process of a group corresponding to the first group information;
wherein the first group information is one group information in the at least one group information.

16. The apparatus according to claim 15, wherein the if a group identity in a first group information is the blocking identity or operators in an operator information table in the first group information comprise blocking operators, invoking combination operators, and replacing all operators in a group corresponding to the first group information with the combination operators is specifically:
if the group identity in the first group information is the blocking identity or if the operators in the operator information table in the first group information comprise the blocking operators, invoking the combination operators from an information mapping table according to all blocking operators in the first group, and replacing all operators in the first group with the combination operators, wherein the information mapping table is a table showing a mapping relationship between a blocking operator and a combination operator.

17. The apparatus according to claim 15 or 16, wherein if the combination operators are sequence operators,
after invoking the combination operators, and replacing all operators in the group corresponding to the first group information with the combination operators, the processing unit is further configured to: perform segmentation processing on each column of data of the columnar database, and successively perform processing by using the combination operators and in a sequence of segments of data that are obtained by segmentation.

18. The apparatus according to claim 13, wherein the processing unit is specifically configured to:
if all operators in an operator information table in a first group information are all sequence operators, perform segmentation processing on each column of data in the columnar database, and successively perform processing by using each operator in a group corresponding to the first group information and in a sequence of segments of data that are obtained by segmentation;
or,
if operators in an operator information table in a first group information comprise blocking operators, invoke combination operators, and replace all operators in a group corresponding to the first group information with the combination operators;
or,
if operators in an operator information table in a first group information are common operators, skip modifying an execution process of a group corresponding to the first group information;
wherein the first group information is one group information in the at least one group information.

19. A columnar database processing apparatus, comprising: a processor and a memory, wherein the memory stores an execution instruction; when the apparatus runs, the processor and the memory communicate with each other; and the processor executes the execution instruction to enable the apparatus to execute the following method:
acquiring a database action statement of a columnar database, and generating a first execution diagram according to the database action statement;
grouping operators in the first execution diagram, to generate at least one group information, wherein each group information corresponds to one group;
modifying an execution process of the first execution diagram according to the at least one group information, to generate a second execution diagram; and
processing data in the columnar database according to the second execution diagram.

20. The apparatus according to claim 19, in the method executed by the processor, the grouping operators in the first execution diagram, to generate at least one group information comprises: traversing the first execution diagram, and successively determining whether each operator in the first execution diagram has a barrier feature; if a currently determined operator has the barrier feature, terminating a current group, generating group information of the current group, and generating a new group; if the currently determined operator does not have the barrier feature, adding the currently determined operator to the current group;
wherein the barrier feature comprises a specific operation pre-selected by a user, and the specific operation is any one of the following operations: a selection operation, a multi-table input operation, and an output-to-multiple-operator operation.

21. The apparatus according to claim 19 or 20, wherein in the method executed by the processor, the modifying an execution process of the first execution diagram according to the at least one group information, to generate a second execution diagram comprises: modifying, according to each piece of group information in the at least one group information, an execution process of a group corresponding to each piece of group information; and integrating execution processes, obtained by modification, of groups corresponding to all pieces of group information, to generate the second execution diagram.

22. The apparatus according to claim 21, wherein the grouping information comprises an operator information table, and the operator information table is a table showing a relationship between each operator in the group and an operator type corresponding to each operator, wherein the operator type is a sequence operator, a blocking operator, or a common operator, and the common operator refers to an operator of another type than the sequence operator and the blocking operator.

23. The apparatus according to claim 22, wherein the group information further comprises a group identity, wherein if the group identity is a sequence identity, it indicates that operators in a group corresponding to the group information are all sequence operators; if the group identity is a blocking identity, it indicates that operators in a group corresponding to the group information comprise blocking operators; if the group information does not comprise a group identity, it indicates that operators in a group corresponding to the group information are all common operators.

24. The apparatus according to claim 23, wherein in the method executed by the processor, the modifying, according to each piece of group information in the at least one group information, an execution process of a group corresponding to each piece of group information comprises:
if a group identity in a first group information is the sequence identity, performing segmentation processing on each column of data in the columnar database, and successively performing processing by using each operator in a group corresponding to the first group information and in a sequence of segments of data that are obtained by segmentation;
or,
if a group identity in a first group information is the blocking identity, invoking combination operators, and replacing all operators in a group corresponding to the first group information with the combination operators;
or,
if a first group information does not comprise a group identity, skipping modifying an execution process of a group corresponding to the first group information;
wherein the first group information is one group information in the at least one group information.

25. The apparatus according to claim 24, wherein in the method executed by the processor, the if a group identity in a first group information is the blocking identity, invoking combination operators, and replacing all operators in a group corresponding to the first group information with the combination operators comprises: if the group identity in the first group information is the blocking identity, invoking the combination operators from an information mapping table according to all blocking operators in the first group, and replacing all operators in the first group with the combination operators, wherein the information mapping table is a table showing a mapping relationship between a blocking operator and a combination operator.

26. The apparatus according to claim 24 or 25, wherein if the combination operators are sequence operators,
after the invoking combination operators, and replacing all operators in a group corresponding to the first group information with the combination operators, the method executed by the processor further comprises: performing segmentation processing on each column of data of the columnar database, and successively performing processing by using the combination operators and in a sequence of segments of data that are obtained by segmentation.

27. The apparatus according to claim 22, wherein in the method executed by the processor, the modifying, according to each piece of group information in the at least one group information, an execution process of a group corresponding to each piece of group information comprises:
if all operators in an operator information table in a first group information are all sequence operators, performing segmentation processing on each column of data in the columnar database, and successively performing processing by using each operator in a group corresponding to the first group information and in a sequence of segments of data that are obtained by segmentation;
or,
if operators in an operator information table in a first group information comprise blocking operators, invoking combination operators, and replacing all operators in a group corresponding to the first group information with the combination operators;
or,
if operators in an operator information table in a first group information are common operators, skipping modifying an execution process of a group corresponding to the first group information;
wherein the first group information is one of the at least one group information.
